# EUROPEAN PATENT SPECIFICATION

(11) **EP 3 395 574 B1**
(45) Date of publication and mention of the grant of the patent: **23.09.2020**
(21) Application number: 16878334.8
(22) Date of filing: 06.12.2016
(51) Int. Cl.: B41J 11/00, B41J 15/04, B41M 5/00

(54) **INKJET PRINTER AND INKJET PRINTING METHOD USING SAME**
TINTENSTRAHLDRUCKER UND TINTENSTRAHLDRUCKVERFAHREN MIT VERWENDUNG DAVON
IMPRIMANTE À JET D'ENCRE ET PROCÉDÉ D'IMPRESSION L'UTILISANT

(30) Priority: 25.12.2015 JP 2015254090
(43) Date of publication of application: 31.10.2018
(73) Proprietor: Think Laboratory Co., Ltd., Kashiwa-shi Chiba 277-8525 (JP)
(72) Inventor: FUJII, Shota, Kashiwa-shi Chiba 277-8525 (JP); SHIGETA, Tatsuo, Kashiwa-shi Chiba 277-8525 (JP)
(74) Representative: Mincone, Antimo
(86) International application number: PCT/JP2016/086125
(87) International publication number: WO 2017/110441

(56) References cited:
- JP-A- 2006 248 173
- JP-A- 2009 279 777
- JP-A- 2011 063 020
- JP-A- 2013 203 544

## Description

### Technical Field

The present invention relates to an inkjet printer which is configured to perform single-pass system image formation with aqueous ink on a web-shaped printing base material, and an inkjet printing method using the inkjet printer.

### Background Art

Hitherto, as a method of performing inkjet printing with aqueous ink on a printing base material through use of an inkjet printer, there has been proposed a method of performing printing while heating the printing base material being conveyed (Patent Document 1).

As a method of heating the printing base material being conveyed as described above, there has been employed a method of heating a back surface of the printing base material through use of a hot plate or the like.

However, even when the back surface of the printing base material is heated through use of the hot plate or the like, there arises the following problem in a case of performing printing while continuously conveying the printing base material. That is, when a printing speed reaches a speed of about 15 m/min, ink flow and color blurring caused by insufficient drying of ink and the like, color mixing during multicolor printing, and the like occur.

Further, as methods of performing printing while continuously conveying the printing base material, there are given a scan system and a single-pass system. Of those systems, the single-pass system is more suitable for high-speed printing because the single-pass system does not require scanning. A single-pass system inkjet recording method is disclosed, for example, in Patent Document 2. However, when the printing speed reaches the speed of about 15 m/min as described above, there arises a problem in that ink flow and color blurring caused by insufficient drying of ink and the like, color mixing during multicolor printing, and the like occur, with the result that there is difficulty in increasing the printing speed.

### Prior Art Documents

### Patent Documents

Patent Document 1: JP 2014-214160 A
Patent Document 2: JP 2010-142966 A

US-A1-2011/0063359 discloses an imaging device includes a substantially continuous web of media; a web transport system configured to transport the continuous web along a web path; and a print station positioned along the web path and configured to apply ink to a first side of the continuous web to form images thereon. An image sensor is positioned downstream from the print station along the web path to scan a second side of the continuous web opposite from the first side. The image sensor is configured to generate a reflectance signal indicative of a reflectance of light from the second side of the continuous web. A controller is operably coupled to receive the reflectance signal from the image sensor, and to adjust at least one print process parameter based on the reflectance signal while the imaging device is performing print operations.

### Summary of the Invention

### Problems to be solved by the Invention

It is an object of the present invention to provide an inkjet printer which is capable of preventing ink flow and color blurring as well as color mixing during multicolor printing when image formation is performed with aqueous ink on a web-shaped printing base material, and to provide an inkjet printing method using the inkjet printer.

### Means for Solving Problems

In order to solve the above-mentioned problems, an inkjet printer according to the present invention is an inkjet printer for aqueous ink which is configured to perform image formation by discharging aqueous ink to a web-shaped printing base material, and comprises: a conveyance mechanism configured to continuously convey the web-shaped printing base material; a single-pass system inkjet head configured to discharge, by a single-pass system, the aqueous ink to a surface of the web-shaped printing base material conveyed by the conveyance mechanism; and a surface pre-heating unit which is arranged on an upstream side of conveyance from the single-pass system inkjet head and is configured to heat at least the surface of the web-shaped printing base material, wherein image formation through use of the single-pass system inkjet head is performed on the web-shaped printing base material heated by the surface pre-heating unit. The invention is defined in the claims.

Heating by the surface pre-heating unit is performed through use of hot air blowing means for applying hot air to the surface of the web-shaped printing base material.

For example, hot air at a temperature of from 40°C to 80°C is preferably applied to the surface of the web-shaped printing base material through use of the hot air blowing means.

The hot air blowing means comprises: a nozzle group main body having a plurality of slit-shaped hot air blowing nozzles arranged so as to form gaps therebetween, the plurality of slit-shaped hot air blowing nozzles each having a slit-shaped hot air outlet port extending in a width direction of the web-shaped printing base material; and a suction mechanism configured to suck an atmosphere of the gaps formed in the nozzle group main body.

The inkjet printer preferably further comprises a back surface heating unit configured to heat a back surface of the web-shaped printing base material. Heating by the back surface heating unit is preferably performed through use of hot air blowing means or a hot plate.

Further, heating means similar to the above-mentioned surface pre-heating unit may be arranged, as a surface post-heating unit, on a downstream side of conveyance of the web-shaped printing base material from the inkjet head.

The web-shaped printing base material is preferably a transparent film. As the web-like printing base material being the transparent film, a transparent film using PET (polyethylene terephthalate), PVC (polyvinyl chloride), PP (polypropylene), or the like may be suitably used.

An inkjet printing method according to the present invention comprises performing, through use of the said inkjet printer, single-pass system image formation through use of the single-pass system inkjet head with aqueous ink on the web-shaped printing base material heated by the surface pre-heating unit of the inkjet printer.

### Advantageous Effects of the Invention

According to the present invention, there is provided a remarkable effect of being capable of providing an inkjet printer which is capable of preventing ink flow and color blurring, and color mixing during multicolor printing when image formation is performed with aqueous ink on a web-shaped printing base material, and an inkjet printing method using the inkjet printer.

### Brief Description of Drawings

FIG. 1 is a sectional structural view for illustrating one embodiment of an inkjet printer according to the present invention.
FIG. 2 is a perspective view for illustrating an embodiment of hot air blowing means to be used in the inkjet printer of the present invention.
FIG. 3 is an enlarged view for illustrating a main portion of FIG. 1.
FIG. 4 is an enlarged view for illustrating a main portion of another embodiment of an inkjet printer according to the present invention.
FIG. 5 is an enlarged view for illustrating a main portion of still another embodiment of an inkjet printer according to the present invention.

### Modes for Carrying out the Invention

Embodiments of the present invention are described below but those embodiments are described as examples and hence it is understood that various modifications may be made thereto. In addition, the same members are denoted by the same reference symbols.

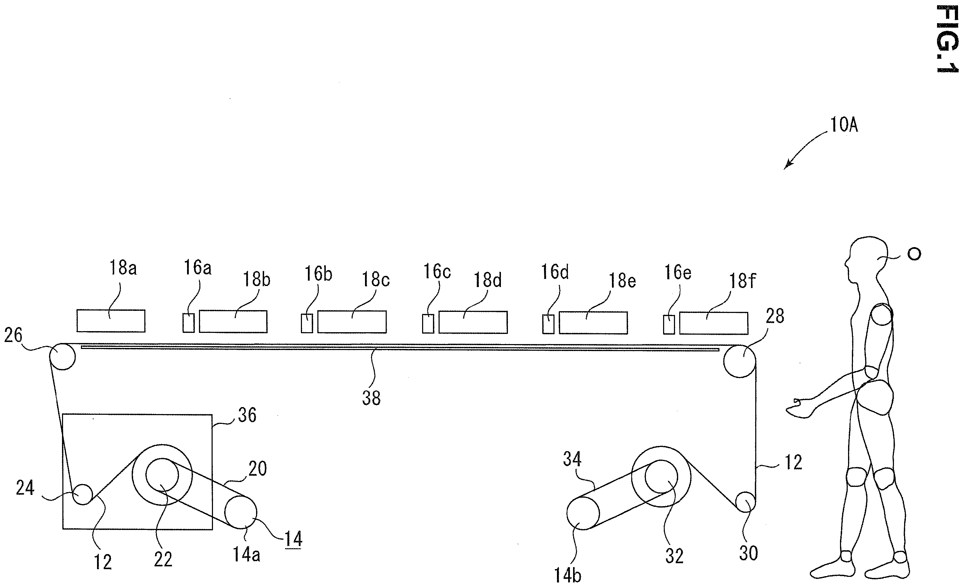

FIG. 1 is a sectional structural view for illustrating one embodiment of an inkjet printer according to the present invention.

In FIG. 1, the reference symbol 10A denotes an inkjet printer of the present invention. The inkjet printer 10A is an inkjet printer for aqueous ink which is configured to perform image formation by discharging aqueous ink to a web-shaped printing base material 12. The inkjet printer 10A comprises: a conveyance mechanism 14 (conveyance mechanisms 14a and 14b in the illustrated embodiment) configured to continuously convey the web-shaped printing base material 12; single-pass system inkjet heads 16a to 16e configured to discharge, by a single-pass system, aqueous ink to a surface of the web-shaped printing base material 12 conveyed by the conveyance mechanism 14; and surface pre-heating units 18a to 18e which are arranged on an upstream side of conveyance from the inkjet heads 16a to 16e and are configured to heat at least the surface of the web-shaped printing base material 12. The ink is discharged by the inkjet heads 16a to 16e to the web-shaped printing base material 12 heated by the surface pre-heating units 18a to 18e. Further, surface post-heating units 18b to 18f are arranged on a downstream side of conveyance from the inkjet heads 16a to 16e so that drying of aqueous ink discharged by the inkjet heads 16a to 16e is further accelerated.

The surface pre-heating units 18b to 18e also act as surface post-heating units and also serve as the surface post-heating units 18b to 18e.

As the inkjet heads 16a to 16e, various known single-pass system inkjet discharge devices can be used.

As the conveyance mechanism 14, any known mechanism can also be used as long as the mechanism can convey the web-shaped printing base material 12. As illustrated in FIG. 1, it is possible to adopt a configuration comprising drive belts 20 and 34, an original roller 22 around which the web-shaped printing base material 12 is wound, various rollers 24, 26, 28, and 30 configured to convey the web-shaped printing base material 12, and a roll-up roller 32 configured to roll up the printed web-shaped printing base material 12. There is illustrated an operator O of the inkjet printer.

Further, the original roller 22 around which the web-shaped printing base material 12 is wound is accommodated in a heating box 36, and is heated in advance (pre-heated) to a temperature of from 60°C to 70°C. As a method of heating in the heating box 36, heating may be performed with hot air or by various known heaters. In the illustrated example, there is illustrated a configuration in which the inside of the heating box 36 is heated with hot air.

At least the surface of the web-shaped printing base material 12 heated in advance as described above is heated by the surface pre-heating unit 18a arranged on the upstream side of conveyance from the inkjet heads 16a to 16e. As the surface pre-heating unit 18a, an example is given of hot air blowing means. In the hot air blowing means, hot air at a temperature of from about 40°C to about 80°C, for example, a temperature of 70°C is applied to the surface of the web-shaped printing base material 12. A time period for applying hot air is from about 2 seconds to about 3 seconds in the case of a printing speed of 15 m/min, but is appropriately changed also depending on the temperature of the hot air.

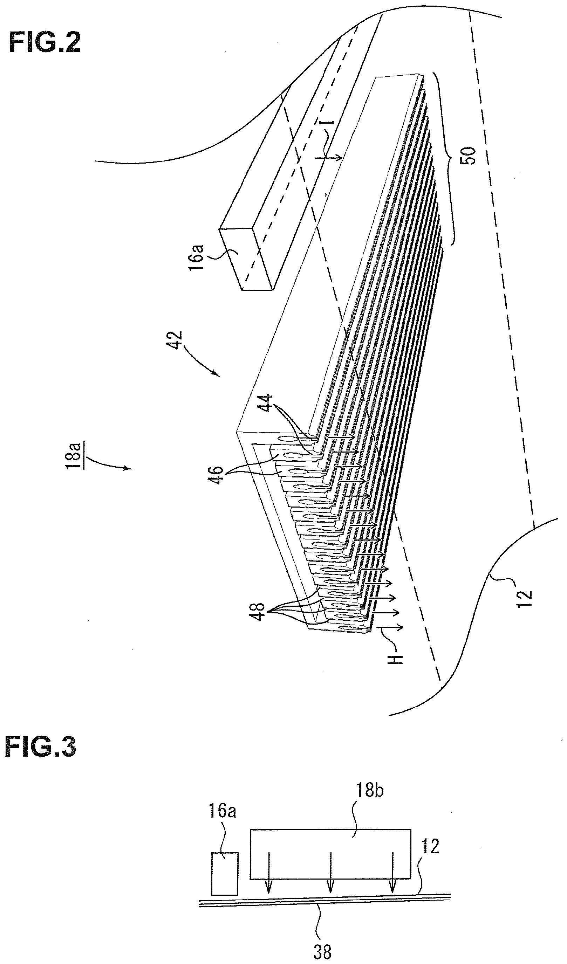

An embodiment of the hot air blowing means to be used as the surface pre-heating units 18a to 18e is illustrated in FIG. 2. As is well illustrated in FIG. 2, as hot air blowing means 42 being the surface pre-heating unit 18a, it is necessary to adopt a configuration comprising a nozzle group main body 50 having a plurality of slit-shaped hot air blowing nozzles 46 arranged so as to form gaps 48 therebetween, the slit-shaped hot air blowing nozzles 46 each having a slit-shaped hot air outlet port 44 extending in a width direction of the web-shaped printing base material 12, and a suction mechanism (not shown) configured to suck an atmosphere of the gaps 48 formed in the nozzle group main body 50. The atmosphere of the gaps 48 is sucked in a direction opposite to blowing of hot air H (direction opposite to the arrow of FIG. 2) by the suction mechanism (not shown). As the suction mechanism, various known suction devices can be used and hence illustration thereof is omitted. Thus, the effect of reducing color blurring and the like caused by aqueous ink is achieved through suction of the atmosphere of the gaps 48.

Further, in the example illustrated in FIG. 1, as is well illustrated in FIG. 3, there is illustrated an example in which hot air blowing means similar to the hot air blowing means serving as the surface pre-heating unit 18a is used also as the surface post-heating unit 18b and arranged on the downstream side of conveyance from the inkjet head 16a. As is well illustrated in FIG. 1 and FIG. 2, the inkjet heads 16a to 16e are inkjet heads having respective ink storage tanks (not shown) for cyan (C), magenta (M), yellow (Y), black (B), and white (W), and aqueous ink I of respective colors is discharged from the inkjet heads 16a to 16e.

Further, in the embodiment illustrated in FIG. 1, a back surface heating unit 38 configured to heat the web-shaped printing base material 12 from a back surface thereof is arranged. As the back surface heating unit 38, a known hot plate can be used, and for example, an electrothermal heater having a filament laid on a ceramic plate can be used. When the hot plate is used as the back surface heating unit 38, it is suitable that the hot plate be used after being heated to a temperature of, for example, from 40°C to 65°C. It is appropriate that the back surface heating unit 38 be arranged so as to correspond to the inkjet heads 16a to 16e. The back surface heating unit 38 may also be arranged across setting positions of the inkjet heads 16a to 16e as illustrated in FIG. 1, or can also be arranged in accordance with each setting position of the inkjet heads 16a to 16e.

Further, as the back surface heating unit 38, the hot air blowing means similar to the surface pre-heating unit 18a can also be used. Further, when the hot air blowing means is used as the back surface heating unit 38, it is suitable that, for example, hot air at a temperature of from 40°C to 80°C be applied to the back surface of the web-shaped printing base material 12.

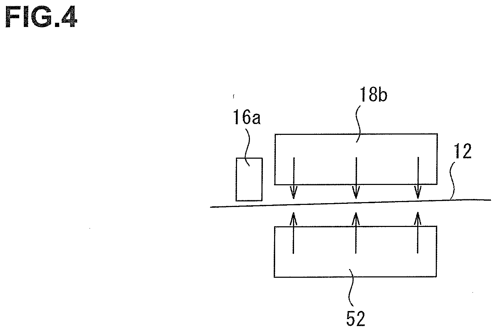

In FIG. 4, there is illustrated an example in which the hot air blowing means is used as the back surface heating unit 38. In FIG. 4, there is illustrated hot air blowing means 52 serving as the back surface heating unit 38. The configuration other than arrangement of the hot air blowing means 52 as the back surface heating unit 38 is the same as the above-mentioned configuration.

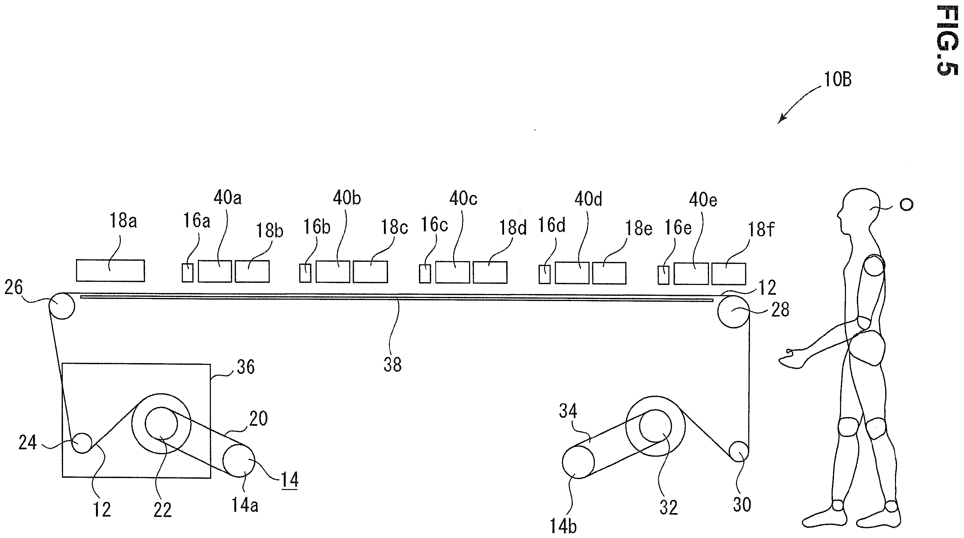

Next, still another embodiment of an inkjet printer according to the present invention is illustrated in FIG. 5.

In FIG. 5, the reference symbol 10B denotes another embodiment of an inkjet printer of the present invention. In the inkjet printer 10B, as additional surface post-heating units, laser irradiation devices 40a to 40e are arranged on the downstream side of conveyance from the inkjet heads 16a to 16e. The configuration of the inkjet printer 10B is the same as that of the inkjet printer 10A described above except that the laser irradiation devices 40a to 40e are arranged.

With the inkjet printers 10A and 10B constructed as described above, when ink discharge by the inkjet heads 16a to 16e is performed with aqueous ink to the web-shaped printing base material 12 heated by the surface pre-heating unit 18a of the inkjet printers 10A and 10B, printing can be suitably performed with respect to a transparent PET film as the web-shaped printing base material without ink flow and color blurring, color mixing during multicolor printing, and the like even at a printing speed of 15 m/min. Further, as illustrated in the inkjet printers 10A and 10B, when the surface post-heating units and the back surface heating unit are combined, ink flow and ink blurring, color mixing during multicolor printing, and the like are further eliminated, and printing can be suitably performed.

### Reference Signs List

10A, 10B: inkjet printer, 12: web-shaped printing base material, 14, 14a, 14b: conveyance mechanism, 16a to 16e: single-pass system inkjet head, 18a to 18e: surface pre-heating unit, 18b to 18f: surface post-heating unit, 20, 34: drive belt, 22: original roller, 24, 26, 28, 30: roller, 32: roll-up roller, 36: heating box, 38: back surface heating unit, 40a to 40e: laser irradiation device, 42, 52: hot air blowing means, 44: slit-shaped hot air outlet port, 46: slit-shaped hot air blowing nozzle, 48: gap, 50: nozzle group main body, H: hot air, I: aqueous ink, O: operator.

## Claims

1. An inkjet printer (10A, 10B) for aqueous ink which is configured to perform image formation by discharging aqueous ink (I) to a web-shaped printing base material (12), comprising:
a conveyance mechanism (14, 14a, 14b) configured to continuously convey the web-shaped printing base material (12);
a respective single-pass system inkjet head (16a, 16b, 16c, 16d, 16e) configured to discharge the aqueous ink of respective color, by a single-pass system, the aqueous ink (I) to a surface of the web-shaped printing base material (12) conveyed by the conveyance mechanism (14, 14a, 14b); and
a respective surface pre-heating unit (18a, 18b, 18c, 18d, 18e) which is arranged on an upstream side of conveyance from the respective single-pass system inkjet head (16a, 16b, 16c, 16d, 16e) and is configured to heat at least the surface of the web-shaped printing base material (12),
wherein image formation through use of the single-pass system inkjet head is performed on the web-shaped printing base material heated by the surface pre-heating unit,
wherein heating by the surface pre-heating unit (18a, 18b, 18c, 18d, 18e) is performed through use of hot air blowing means (42,52) for applying hot air to the surface of the web-shaped printing base material (12), and **characterized in that** the hot air blowing means (42,52) comprises:
a nozzle group main body (50) having a plurality of slit-shaped hot air blowing nozzles (46) arranged so as to form gaps (48) therebetween, the plurality of slit-shaped hot air blowing nozzles (46) each having a slit-shaped hot air outlet port extending in a width direction of the web-shaped printing base material; and
a suction mechanism configured to suck an atmosphere of the gaps formed in the nozzle group main body.

2. An inkjet printer according claim 1, further comprising a back surface heating unit (38) configured to heat a back surface of the web-shaped printing base material.

3. An inkjet printer according to claim 2, wherein heating by the back surface heating unit (38) is performed through use of hot air blowing means or a hot plate.

4. An inkjet printer according to any one of claims 1 to 3, wherein the web-shaped printing base material (12) is a transparent film.

5. An inkjet printing method, comprising performing, through use of the inkjet printer (10A, 10B) according to any one of claims 1 to 4, single-pass system image formation through use of the single-pass system inkjet head with aqueous ink on the web-shaped printing base material (12) heated by the surface pre-heating unit (18a, 18b, 18c, 18d, 18e) of the inkjet printer.

## Patentansprüche

1. Tintenstrahldrucker (10A, 10B) für wasserhaltige Tinte, der dazu konfiguriert ist, durch Ausstoßen von wasserhaltiger Tinte (I) auf ein bahnförmiges Druckbasismaterial (12) eine Bilderzeugung durchzuführen, umfassend:
einen Fördermechanismus (14, 14a, 14b), der dazu konfiguriert ist, das bahnförmige Druckbasismaterial (12) kontinuierlich zu fördern;
einen entsprechenden Single-Pass-System-Tintenstrahlkopf (16a, 16b, 16c, 16d, 16e), der dazu konfiguriert ist, die wasserhaltige Tinte einer entsprechenden Farbe durch ein Single-Pass-System die wasserhaltige Tinte (I) auf eine Oberfläche des bahnförmigen Druckbasismaterials (12), das durch den Fördermechanismus (14, 14a, 14b) gefördert wird, auszustoßen; und
eine entsprechende Oberflächenvorheizeinheit (18a, 18b, 18c, 18d, 18e), die von dem entsprechenden Single-Pass-System-Tintenstrahlkopf (16a, 16b, 16c, 16d, 16e) aus auf einer der Förderung vorgelagerten Seite angeordnet ist und dazu konfiguriert ist, zumindest die Oberfläche des bahnförmigen Druckbasismaterials (12) zu erwärmen,
wobei die Bilderzeugung durch die Verwendung des Single-Pass-System-Tintenstrahlkopfs auf dem bahnförmigen Druckbasismaterial, das durch die Oberflächenvorheizeinheit erwärmt ist, durchgeführt wird,
wobei das Erwärmen durch die Oberflächenvorheizeinheit (18a, 18b, 18c, 18d, 18e) durch die Verwendung eines Heißluftblasmittels (42, 52) zum Aufbringen von heißer Luft auf die Oberfläche des bahnförmigen Druckbasismaterials (12) durchgeführt wird, und
**dadurch gekennzeichnet, dass** das Heißluftblasmittel (42, 52) umfasst:
einen Düsengruppenhauptkörper (50), der eine Mehrzahl von schlitzförmigen Heißluftblasdüsen (46) aufweist, die so angeordnet sind, dass sie Zwischenräume (48) zwischen diesen bilden, wobei die Mehrzahl von schlitzförmigen Heißluftblasdüsen (46) je eine schlitzförmige Heißluftauslassöffnung aufweisen, die sich in einer Breitenrichtung des bahnförmigen Druckbasismaterials erstreckt; und
einen Saugmechanismus, der dazu konfiguriert ist, eine Lufthülle der in dem Düsengruppenhauptkörper gebildeten Zwischenräume einzusaugen.

2. Tintenstrahldrucker nach Anspruch 1, weiter umfassend eine Rückseitenheizeinheit (38), die dazu konfiguriert ist, eine Rückseite des bahnförmigen Druckbasismaterials zu erwärmen.

3. Tintenstrahldrucker nach Anspruch 2, wobei das Erwärmen durch die Rückseitenheizeinheit (38) durch die Verwendung eines Heißluftblasmittels oder einer Heizplatte durchgeführt wird.

4. Tintenstrahldrucker nach einem der Ansprüche 1 bis 3, wobei das bahnförmige Druckbasismaterial (12) eine transparente Folie ist.

5. Tintenstrahldruckerverfahren, umfassend ein Durchführen, durch die Verwendung des Tintenstrahldruckers (10A, 10B) nach einem der Ansprüche 1 bis 4, einer Single-Pass-System-Bilderzeugung durch die Verwendung des Single-Pass-System-Tintenstrahlkopfs mit wasserhaltiger Tinte auf dem durch die Oberflächenvorheizeinheit (18a, 18b, 18c, 18d, 18e) des Tintenstrahldruckers erwärmten bahnförmigen Druckbasismaterial (12).

## Revendications

1. Imprimante à jet d'encre (10A, 10B) pour de l'encre aqueuse qui est configurée pour mettre en œuvre une formation d'image en déchargeant de l'encre aqueuse (I) sur un matériau de base d'impression en forme de bande (12), comprenant :
un mécanisme de transport (14, 14a, 14b) configuré pour transporter de façon continue le matériau de base d'impression en forme de bande (12) ;
une tête de jet d'encre à système à passage unique (16a, 16b, 16c, 16d, 16e) respective configurée pour décharger l'encre aqueuse de couleur respective, par un système à passage unique, l'encre aqueuse (I) sur une surface du matériau de base d'impression en forme de bande (12) transportée par le mécanisme de transport (14, 14a, 14b) ; et
une unité de préchauffage de surface (18a, 18b, 18c, 18d, 18e) respective qui est agencée sur un côté amont du moyen de transport depuis l'unité de préchauffage de surface (16a, 16b, 16c, 16d, 16e) respective et est configurée pour chauffer au moins la surface du matériau de base d'impression en forme de bande (12),
dans laquelle une formation d'image par l'utilisation de la tête de jet d'encre à système à passage unique est mise en œuvre sur le matériau de base d'impression en forme de bande chauffé par l'unité de préchauffage de surface,
dans lequel un chauffage par l'unité de préchauffage de surface (18a, 18b, 18c, 18d, 18e) est mis en œuvre par l'utilisation d'un moyen de soufflage d'air chaud (42,52) pour appliquer de l'air chaud sur la surface du matériau de base d'impression en forme de bande (12), et
**caractérisée en ce que** le moyen de soufflage d'air chaud (42,52) comprend :
un corps principal de groupe de buses (50) ayant une pluralité de buses de soufflage d'air chaud en forme de fente (46) agencées de façon à former des espacements (48) entre elles, la pluralité de buses de soufflage d'air chaud en forme de fente (46) ayant chacune un orifice de sortie d'air chaud en forme de fente s'étendant dans une direction en largeur du matériau de base d'impression en forme de bande ; et
un mécanisme d'aspiration configuré pour aspirer une atmosphère des espacements formés dans le corps principal de groupe de buses.

2. Imprimante à jet d'encre selon la revendication 1, comprenant en outre une unité chauffante de surface arrière (38) configurée pour chauffer une surface arrière du matériau de base d'impression en forme de bande.

3. Imprimante à jet d'encre selon la revendication 2, dans laquelle le chauffage par l'unité chauffante de surface arrière (38) est mis en œuvre par l'utilisation d'un moyen de soufflage d'air chaud ou d'une plaque chaude.

4. Imprimante à jet d'encre selon l'une quelconque des revendications 1 à 3, dans laquelle le matériau de base d'impression en forme de bande (12) est un film transparent.

5. Procédé d'impression à jet d'encre, comprenant la mise en œuvre, par l'utilisation de l'imprimante à jet d'encre (10A, 10B) selon l'une quelconque des revendications 1 à 4, d'une formation d'image à système à passage unique par l'utilisation de la tête de jet d'encre à système à passage unique avec de l'encre aqueuse sur le matériau de base d'impression en forme de bande (12) chauffé par l'unité de préchauffage de surface (18a, 18b, 18c, 18d, 18e) de l'imprimante à jet d'encre.
